# EUROPEAN PATENT SPECIFICATION

(11) **EP 2 520 553 B1**
(45) Date of publication and mention of the grant of the patent: **06.11.2019**
(21) Application number: 10840971.5
(22) Date of filing: 27.12.2010
(51) Int. Cl.: C04B 40/00, C04B 28/02, C04B 103/14

(54) **HARDENING ACCELERATOR FOR HYDRAULIC COMPOSITION**
HÄRTUNGSBESCHLEUNIGER FÜR HYDRAULISCH ABBINDENDE ZUSAMMENSETZUNG
ACCÉLÉRATEUR DE DURCISSEMENT POUR COMPOSITION HYDRAULIQUE

(30) Priority: 10.02.2010 JP 2010027267; 28.12.2009 JP 2009296731
(43) Date of publication of application: 07.11.2012
(73) Proprietor: Kao Corporation, Chuo-ku Tokyo 103-8210 (JP)
(72) Inventor: HAMAI Toshimasa, Wakayama-shi Wakayama 640-8580 (JP); YOSHIKAWA Yohei, Wakayama-shi Wakayama 640-8580 (JP); MITSUDA Yoshinori, Wakayama-shi Wakayama 640-8580 (JP); FUKUSHIMA Tetsuaki, Wakayama-shi Wakayama 640-8580 (JP); SHIMODA Masaaki, Wakayama-shi Wakayama 640-8580 (JP); NAKA Yoshihito, Tokyo 131-8501 (JP); YOSHINAMI Yusuke, Wakayama-shi Wakayama 640-8580 (JP); KAWAKAMI Hiroyuki, Wakayama-shi Wakayama 640-8580 (JP)
(74) Representative: Hoffmann Eitle
(86) International application number: PCT/JP2010/073491
(87) International publication number: WO 2011/081115

(56) References cited:
- EP-A2- 1 746 109
- WO-A2-2006/051574
- JP-A- 2000 233 959
- JP-A- 2006 282 414
- JP-A- 2008 519 752

## Description

### Field of the invention

The present invention relates to the use of a compound as an early strengthening agent for hydraulic composition, a hydraulic composition, a method for producing the hydraulic composition, and a method for producing a cured article from the hydraulic composition.

### Background of the invention

Concrete products are obtained by kneading materials including cement, an aggregate, water, and a dispersant, filling in various forms, and aging (curing). For these concretes, it is important to exhibit high strength at an early age thereof from the viewpoint of productivity, or for increasing a form turnover rate. For this purpose, measures are taken, including (1) using an early strength cement, (2) using various polycarboxylic acid compounds as an admixture to reduce a water content in a cement composition, and (3) steam curing a concrete. The current demands for further increased productivity and the like sometimes want a more shortened step of curing. For example, in production of some concrete products, a concrete is required to develop high strength only for 16 hours of curing. A general step of curing contains complicated operations such as heating with steam. Modifications in these operations are far from practicable to increase an early strength. In the market, from the point of production cost, there is a strong demand for a simple method for providing a concrete product having high early strength without modification in operations.

In general, time for steam curing is intentionally shortened. But it results in a high energy cost due to use of steam. Another method including no steam curing is demanded to save the energy cost, that is, reduce time of steam curing and decrease the curing temperature.

JP-A No. 06-199555 discloses a curing-accelerating admixture that reduces curing time of a hydraulic cement composition at low temperature without inducing or accelerating corrosion of a steel made reinforcing material, containing a curing-accelerating component such as calcium nitrate and calcium nitrite and a C2 to C6 glycol component in an effective amount for enhancing the curing-accelerating property of the accelerating component. JP-B No.2008-519752 discloses use of untreated glycerol containing an inorganic alkali metal salt in an amount of 1 to 10% by weight as an additive for cement in order to increase strength of cement.

JP-ANo. 2009-256201, corresponding to WO-A 2009/119897, discloses an early strengthening agent for hydraulic composition, containing a glycol ether compound or a glycerol derivative.

JP-A No. 2009-256202, corresponding to WO-A2009/119893, discloses an additive composition for hydraulic composition, containing a glycol ether compound or a glycerol derivative and a copolymer.

JP-A No. 2010-089972, published on Apr. 22, 2010, discloses a method for producing a hydraulic composition containing a ground hydraulic powder and a polymer.

WO 2006/051574 A2 discloses a cement additive comprising raw glycerol having 1 to 10% by weight of alkali metal inorganic salt impurities.

### Summary of the invention

The present invention relate to the use of a compound represented by formula (1) (hereinafter, referred to as compound (1)) and at least one inorganic salt A selected from alkali metal sulfates and alkali metal thiosulfates; as an early strengthening agent by adding compound (1) and the inorganic salt A to a hydraulic composition in such amounts that a molar ratio of compound (1) to the inorganic salt A, Compound (1)/inorganic salt A, is 5/95 to 45/55: 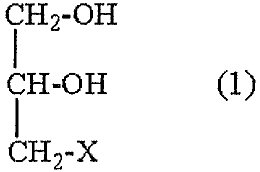 wherein, X represents a hydroxy group or an amino group.

The present invention also provides a method for producing a hydraulic composition, including a step of mixing a hydraulic powder with a compound represented by formula (1) and at least one inorganic salt A selected from alkali metal sulfates and alkali metal thiosulfates, wherein a molar ratio of the compound represented by formula (1) to the inorganic salt A is 5/95 to 45/55: 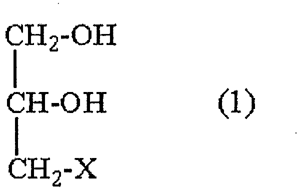 wherein, X represents a hydroxy group or an amino group.

The present invention also provides a method for further producing a cured article from the hydraulic composition, containing steps of:
mixing the hydraulic powder with an aggregate, water, compound (1) and at least one inorganic salt A selected from alkali metal sulfates and alkali metal thiosulfates to prepare the hydraulic composition;
filling the hydraulic composition in a form and curing it; and demolding the cured hydraulic composition from the form,
wherein time until demolding from the start of preparing the hydraulic composition is 4 to 10 hours.

The present invention also provides a method for producing a cured article from a hydraulic composition, wherein the compound (1) is glycelrol, and wherein the hydraulic composition further comprises a napthalene dispersant mixed thereto.

The present invention further provides a method for producing a cured article from a hydraulic composition, containing a step of filling the hydraulic composition in a form and curing without steam curing.

### Detailed Description of the Invention

The present invention relates to the use of compound (1) and at least one inorganic salt A as an early strengthening agent for a hydraulic composition, wherein the strength of a cured article of which, such as a concrete product, is increased after about 8 hours from preparation of the composition without heat curing, or in which the early strength property in short time is improved, in which a cured article such as a concrete product having such an initial strength and a good appearance simultaneously is obtained.

The present invention includes the following forms.
A. The use of compound (1) and at least one inorganic salt A as an early strengthening agent for hydraulic composition, wherein a molar ratio of compound (1) to the inorganic salt A, compound (1)/inorganic salt A, is 5/95 to 45/55.
B. The use of compound (1) and at least one inorganic salt A as an early strengthening agent for hydraulic composition, wherein compound (1) has a hydroxy group as X in formula (1).
C. The hydraulic composition, wherein the dispersant is a naphthalene dispersant.
D. The hydraulic composition, wherein the total amount of compound (1) and the inorganic salt A is 0.01 to 10 parts by weight to 100 parts by weight of hydraulic powder.
E. The method for producing a hydraulic composition, wherein a molar ratio of the compound represented by formula (1) to the inorganic salt A is 5/95 to 45/55.

The present invention includes embodiments of using glycerol as compound (1) having a hydroxy group as X and using 3-amino-1,2-propanediol having an amino group as X.

The present invention includes the following form 1, the use of a compound represented by formula (1) (hereinafter, referred to as compound (1)) and at least one inorganic salt A selected from alkali metal sulfates and alkali metal thiosulfates as an early strengthening agent by adding compound (1) and the inorganic salt A to a hydraulic composition in such amounts that a molar ratio of compound (1) to the inorganic salt A, compound (1)/inorganic salt A, is 5/95 to 45/55: 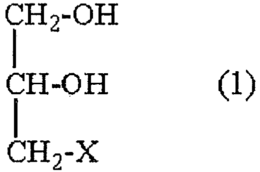 wherein, X represents a hydroxy group or an amino group.

The present invention also includes the following form 2, the hydraulic composition containing glycerol, at least one inorganic salt A selected from alkali metal sulfates and alkali metal thiosulfates, and a naphthalene dispersant, wherein a molar ratio of glycerol to the inorganic salt A, glycerol/inorganic salt A, is 5/95 to 45/55.

According to the present invention, provided is the use of a compound early strengthening agent for hydraulic composition, that aids a concrete to develop a strength of not less than 7 N/mm², and preferably not less than 8 N/mm² after about 8 hours from preparation of the concrete, or is improved in early strengthening property in short time. Use of the early strengthening agent of the present invention improves early strengthening property in short time, shortens time for curing and in turn a working time, and enhances productivity of a concrete product. In addition, these effects can be achieved without special modification in facilities and process for a concrete product in a manufacturing field.

The present invention also provides the use of a compound as an early strengthening agent for hydraulic composition that increases an early-term strength or an early strength of a hydraulic composition without curing after kneading.

Below, the present invention and the form 1 of the present invention will be described in detail.

### <Use of a compond as early strengthening agent for hydraulic composition>

The early strengthening agent for hydraulic composition used in the present invention contains compound (1) and at least one inorganic salt A selected from alkali metal sulfates and alkali metal thiosulfates, wherein a molar ratio of compound (1) to the inorganic salt A, compound (1)/inorganic salt A, is 5/95 to 45/55. From the viewpoint of improvement of early strengthening property for short time, the molar ratio is preferably 10/90 to 40/60, more preferably 20/80 to 40/60, and even more preferably 20/80 to 30/70. In cases of the inorganic salt A containing two or more inorganic salts, the total of moles of inorganic salts is used as a mole of the inorganic salt A to calculate a molar ratio. Use of compound (1) and the inorganic salt A at a molar ratio within this range enables to increase an early-term strength of a cured article of the hydraulic composition (e.g. , strength after about 8 hours from preparation of a concrete) without curing.

From the viewpoint of improvement in early strengthening property in short time, the inorganic salt A is preferably selected from alkali metal sulfates. The inorganic salt A may be hydrated. In cases of using the hydrated inorganic salt A, a weight and the like are calculated based on the anhydride form. Examples of the alkali metal forming a salt include sodium, potassium, and lithium. From the same viewpoint of the effects, preferred are sodium and lithium. Examples of the inorganic salt A include sodium sulfate (Na₂SO₄), potassium sulfate (K₂SO₄), lithium sulfate (Li₂SO₄), sodium thiosulfate (Na₂S₂O₃), potassium thiosulfate (K₂S₂O₃), and lithium thiosulfate (Li₂S₂O₃). From the same viewpoint of improvement in early strengthening property in short time, the inorganic salt A is preferably at least one inorganic salt selected from sodium sulfate and lithium sulfate, and more preferably sodium sulfate.

A mechanism underlying the effects of the present invention is still unknown, but presumed that compound (1) and the inorganic salt A act synergistically on a hydraulic composition to develop strength early. A more specific presumption is as follows. In an early stage of curing of a hydraulic composition, two kinds of reactions take place, one of which is generation of ettringite from an aluminate (C3A) and the other is generation and precipitation of calcium hydroxide derived from alite (C3S) through progress of dissolution of a gypsum component in the composition. Compound (1) and the inorganic salt A mainly act on different reactions, respectively. Compound (1) acts on the generation of ettringite, and the inorganic salt A acts on the generation and precipitation of calcium hydroxide. Corresponding to the reactions, it is observed that the optimum ratio for a rate of the generation of ettringite to a rate of the generation of calcium hydroxide, for providing a cured article having a high early strength, depends on a molar ratio of compound (1) to the inorganic salt A.

From the viewpoint of strength developed after 8 hours, compound (1) is preferably glycerol.

For development of early strengthening property in short time, the early strengthening agent for hydraulic composition used in the present invention is preferably added in an amount of 0.01 to 10 parts by weight, more preferably 0.01 to 5 parts by weight, even more preferably 0.05 to 3 parts by weight, and even more preferably 0.1 to 2 parts by weight to 100 parts by weight of hydraulic powder.

The early strengthening agent for hydraulic composition used in the present invention can be used, similarly to a common early strengthening agent, to be mixed with a hydraulic powder and the like in preparation of a hydraulic composition. Alternatively, a hydraulic powder containing the early strengthening agent for hydraulic composition used in the present invention can be used to prepare a hydraulic composition.

The early strengthening agent for hydraulic composition used in the present invention is preferably used together with a component known as a dispersant such as a phosphate ester polymer, a polycarboxylic acid copolymer, a sulfonic acid copolymer, a naphthalene polymer, a melamine polymer, a phenol polymer, and a lignin polymer. The dispersant may be an admixture containing other component.

The early strengthening agent for hydraulic composition used in the present invention can be used in any inorganic hydraulic powder curing by hydration, including various cements.

The early strengthening agent for hydraulic composition used in the present invention may be in an aqueous solution form for ease of handling. In this case, a concentration is preferably 5 to 50% by weight, and more preferably 10 to 50% by weight from the viewpoint of solubility of the inorganic salt A.

Examples of the cement include normal portland cement, early strength portland cement, ultra early strength portland cement, and eco cement (e.g., JIS R5214). The hydraulic composition can further contain a hydraulic powder other than cement, including blast furnace slag, fly ash, and silica fume. The hydraulic composition can also contain a nonhydraulic limestone fine powder and the like. Silica fume cement and blast furnace cement, mixed with cement, may also be used.

### <Hydraulic composition>

According to the present invention, the hydraulic composition can be provided that contains the early strengthening agent for hydraulic composition used in the present invention and a dispersant. The hydraulic composition of the present invention contains compound (1), the inorganic salt A, and a dispersant, wherein a molar ratio of compound (1) to the inorganic salt A, compound (1)/inorganic salt A, is 5/95 to 45/55. From the viewpoint of strength developed after 8 hours from the preparation, compound (1) is preferably glycerol. Examples of the dispersant that can be used include phosphate ester polymers, polycarboxylic acid copolymers, sulfonic acid copolymers, naphthalene polymers, melamine polymers, phenol polymers, and lignin polymers. From the viewpoint of improvement in early strengthening property in short time of a cured article of the hydraulic composition, preferred are phosphate ester polymers and polycarboxylic acid copolymers.

Phosphate ester polymers are those having a phosphate group. Among these polymers, preferred are those having a polyoxyalkylene group. Examples of the polymer include a compound described in JP-A No. 2006-52381, prepared by copolymerizing a monomer 1 represented by formula (C1), a monomer 2 represented by formula (C2), and a monomer 3 represented by formula (C3): 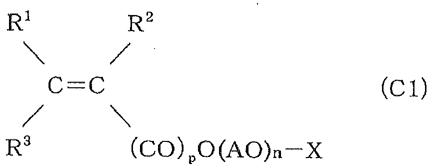 wherein, R¹ and R² each independently represent a hydrogen atom or a methyl group; R³ represents a hydrogen atom or -COO(AO)ₙX; AO represents an oxyalkylene group having 2 to 4 carbon atoms or an oxystyrene group; p represents a number of 0 or 1;n represents an average AO addition mole number ranging from 3 to 200; and X represents a hydrogen atom or an alkyl group having 1 to 18 carbon atoms; 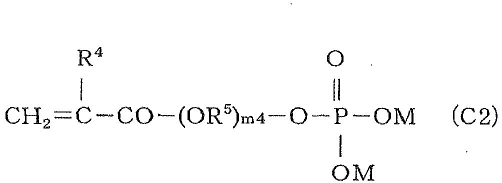 wherein, R⁴ represents a hydrogen atom or a methyl group; R⁵ represents an alkylene group having 2 to 12 carbon atoms; m4 represents a number of 1 to 30; M represents a hydrogen atom, an alkali metal, or an alkaline earth metal (half an atom); and 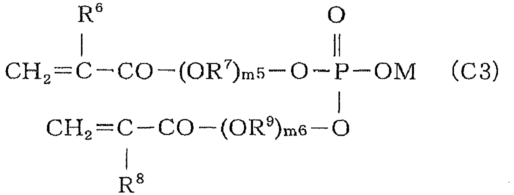 wherein, R⁶ and R⁸ each independently represent a hydrogen atom or a methyl group; R⁷ and R⁹ each independently represent an alkylene group having 2 to 12 carbon atoms; m5 and m6 each independently represent a number of 1 to 30; M represents a hydrogen atom, an alkali metal, or an alkaline earth metal (half an atom).

Polycarboxylic acid copolymers are those having a carboxyl group. Among these polymers, preferred are those having a polyoxyalkylene group. Examples of the copolymer include a compound containing construction units derived from a monomer (D1-1) represented by formula (D1-1) and derived from a monomer (D1-2) represented by formula (D1-2): 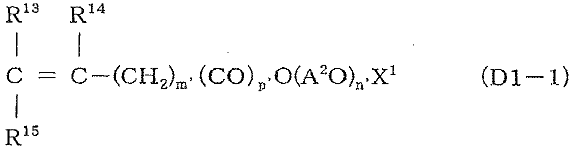 wherein,
R¹³ and R¹⁴ each represent a hydrogen atom or -CH₃,
R¹⁵ represents a hydrogen atom or -COO(AO)ₙX,
A² represents an alkylene group having 2 to 4 carbon atoms,
X¹ represents a hydrogen atom or an alkyl group having 1 to 18 carbon atoms,
m' represents a number of 0 to 2,
n' represents a number of 2 to 300, and
p' represents a number of 0 or 1; and 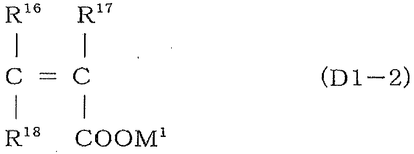
wherein,
R¹⁶, R¹⁷, and R¹⁸, which may be same or different, each represent a hydrogen atom, -CH₃, or (CH₂)ᵣCOOM², wherein (CH₂)ᵣCOOM² may be joined with COOM¹ or other (CH₂)ᵣCOOM² to form an anhydride, and in this case, the anhydride has no M¹ and M² derived from these groups,
M¹ and M² each represent a hydrogen atom, an alkali metal, an alkaline earth metal (half an atom), an ammonium group, an alkylammonium group, or a substituted alkylammonium group, and r represents a number of 0 to 2.

In hydraulic composition of the present invention, the total content of compound (1) and the inorganic salt A is preferably 5 to 95% by weight, more preferably 10 to 50% by weight, even more preferably 10 to 30% by weight, even more preferably 15 to 30% by weight, and yet even more preferably 20 to 30% by weight. For increasing strength in demolding or improving early strengthening property in short time, the total content is preferably not less than 5% by weight, and from the viewpoints of uniformity and stability of a product, the total content is preferably not more than 95% by weight.

The hydraulic composition of the present invention preferably includes a total content of compound (1) and the inorganic salt A of 0.01 to 5 parts by weight, more preferably 0.05 to 3 parts by weight, and even more preferably 0.1 to 2 parts by weight to 100 parts by weight of hydraulic powder. The range is used as a guide for defining contents of compound (1) and the inorganic salt A in the hydraulic composition of the present invention.

For increasing fluidity of a concrete, the hydraulic composition of the present invention preferably includes a content of the dispersant of 0.01 to 10 parts by weight, more preferably 0.1 to 5 parts by weight, and even more preferably 0.2 to 1 part by weight to 100 parts by weight of hydraulic powder.

From the viewpoint of improvement in early strengthening property in short time, in the hydraulic composition of the present invention, a weight ratio of the total amount of the dispersant to the total content of compound (1) and the inorganic salt A, dispersant/[total content of compound (1) and the inorganic salt A], is 5/95 to 96/4, more preferably 5/95 to 65/35, even more preferably 5/95 to 50/50, even more preferably 5/95 to 30/70, and yet even more preferably 5/95 to 20/80.

From the viewpoint of ease of handling a product, in the hydraulic composition of the present invention, the total content of compound (1), the inorganic salt A, and the dispersant is preferably 10 to 100% by weight, more preferably 10 to 60% by weight, and even more preferably 20 to 40% by weight.

From the viewpoint of improvement in early strengthening property in short time, the hydraulic composition of the present invention preferably includes a content of compound (1), the inorganic salt A, and the dispersant of 0.1 to 10 parts by weight, more preferably 0.2 to 5 parts by weight, and even more preferably 0.2 to 3 parts by weight to 100 parts by weight of hydraulic powder.

The early strengthening agent used in the present invention can be dissolved in advance in water for use to a concrete, mortar, or the like. It can be mixed in advance with a powder such as cement. It can be added together with water. It can be also added meantime from addition of water to kneading up. It can be added to a kneaded concrete or mortar or the like. Alternatively, the early strengthening agent used in the present invention coated with a water-soluble film or the like can be mixed with a concrete, mortar or the like and gradually released with time, Furthermore, the early strengthening agent used in the present invention can be separated into compound (1) and the inorganic salt A and they can be added separately. Addition of these components can be by any method separately selected, including those described above such as mixing with cement powder and dissolving in water to be used, according to need. Some designs in a method of addition such as addition to a kneaded concrete, mortar, or the like may increase a developed early strength.

The hydraulic composition of the present invention can comprise any inorganic hydraulic powder exhibiting properties of curing by hydration, including various cements. Examples of the cement include portland cements such as normal, early strength, ultra early strength, moderate-heat, and white portland cements, and mixed cements such as alumina, fly ash, blast furnace, and silica cements. The hydraulic composition of the present invention can also include a latent hydraulic powder, such as fly ash and blast furnace slag. The hydraulic composition of the present invention can also include a mixed powder of two or more of the above shown powders at any proportion.

The hydraulic composition of the present invention can further contain other additive. Examples of the other additive include AE agents such as resin soap, saturated and unsaturated fatty acids, sodium hydroxystearate, lauryl sulfate, alkylbenzenesulfonic acids and salts thereof, alkane sulfonates, polyoxyalkylene alkyl (phenyl) ethers, polyoxyalkylene alkyl (phenyl) ether sulfuric acid esters and salts thereof, polyoxyalkylene alkyl (phenyl) ether phosphoric acid esters and salts thereof, protein materials, alkenylsuccinic acids, and α-olefin sulfonates; retarders such as oxycarboxylic acids such as gluconic acid, glucoheptonic acid, arabonic acid, malic acid, and citric acid, sugars such as dextrin, monosaccharides, oligosaccharides, and polysaccharides, and sugar alcohols; air-entraining agents; thickeners; silica sands; early strengthening agent or accelerators other than the early strengthening agent of the present invention such as soluble calcium salts (e.g., calcium chloride, calcium nitrite, calcium nitrate, calcium bromide, and calcium iodide), chlorides (e.g., iron chloride, and magnesium chloride), potassium hydroxide, sodium hydroxide, carbonates, formic acid and salts thereof, and alkanolamines; foaming agents; waterproofing agents such as resin acids and salts thereof, fatty acid esters, fats and oils, silicones, paraffins, asphalts, and waxes; blast furnace slags; fluidizers; defoaming agents such as dimethylpolysiloxanes, polyalkylene glycol fatty acid esters, mineral oils, fats and oils, oxyalkylenes, alcohols, and amides; anti-foaming agents; fly ashes; high performance superplasticizers such as melamine sulfonic acid-formalin condensates and aminosulfonic acids; silica fume; rust-preventing agents such as nitrites, phosphates, and zinc oxide; water-soluble polymers such as celluloses (e.g., methylcellulose and hydroxyethyl cellulose), natural polymers (e.g., β-1,3-glucan and xanthane gum), and synthetic polymers (e.g., polyacrylic acid amides, polyethylene glycols, ethylene oxide adducts of oleyl alcohol, and reaction products of these adducts with vinylcyclohexene diepoxide); and polymer emulsions such as of alkyl (meth)acrylates. These components may be blended in the dispersant for hydraulic composition.

The hydraulic composition of the present invention is useful for various concretes in any field, including ready-mixed concrete, vibration concrete, self-leveling concrete, refractory concrete, plaster concrete, gypsum slurry, light-weight concrete or heavy-weight concrete, AE concrete, concrete for repairs, pre-packed concrete, tremie concrete, concrete for foundation improvement, grout concrete, cold weather concrete, air-placing concrete, and sprayed mortar.

The present invention provides the hydraulic composition containing the early strengthening agent for hydraulic composition used in the present invention, a hydraulic powder, an aggregate, and water.

The hydraulic composition of the present invention is a product containing water and a hydraulic powder (cement) such as mortar and concrete. Examples of the aggregate include fine and coarse aggregates. Preferred examples of the fine aggregate include pit sand, land sand, river sand, and crushed sand. Preferred examples of the coarse aggregate include pit gravel, land gravel, river gravel, and crushed gravel. For some applications, light-weight aggregates may be used. Terms of aggregate are in accordance with "THE CONCRETE (first published on Jun. 10, 1998 by Gijutsu Shoin Co., Ltd.). The aggregate preferably contains a little or no mineral selected from silica minerals (e.g., quartz, cristobalite, tridymite, and opal), glasses (e.g., volcanic glass), and silicate minerals (e.g., mica and clay mineral). More specifically, the aggregate preferably contains such a mineral in an amount of not more than 5% by weight, and more preferably not more than 3% by weight.

The hydraulic composition preferably has a ratio of water/hydraulic powder [ratio of weight percentages of water and the hydraulic powder in slurry, usually represented as W/P, and also as W/C when the powder is cement] of not more than 65% by weight, more preferably not more than 60%, even more preferably not more than 55%, and even more preferably not more than 50%. The hydraulic composition also preferably has the ratio of not less than 20%, and more preferably not less than 30%. The range of W/P is accordingly preferably 20 to 65%, more preferably 20 to 60%, even more preferably 30 to 55%, and even more preferably 30 to 50%.

The hydraulic composition of the present invention can further contain a dispersant according to need.

The hydraulic composition of the present invention can be produced by a method containing a step of mixing a hydraulic powder with compound (1) and at least one inorganic salt A selected from alkali metal sulfates and alkali metal thiosulfates, wherein a molar ratio of compound (1) to the inorganic salt A, compound (1)/inorganic salt A, is 5/95 to 45/55. In this case, from the viewpoint of improvement of the early strengthening property in short time, the total amount of compound (1) and the inorganic salt A is preferably 0.01 to 10 parts by weight, more preferably 0.2 to 5 parts by weight, and even more preferably 0.2 to 3 parts by weight to 100 parts by weight of hydraulic powder.

The present invention can also provide a cured article such as a concrete product by curing the hydraulic composition containing the early strengthening agent for hydraulic composition used in the present invention, a hydraulic powder, water, and if needed, an aggregate and/or a dispersant. Moreover the hydraulic composition of the present invention is suitable for producing a concrete product by curing the hydraulic composition in a form, because the composition develops strength early and time for demolding is shortened. A specific method for producing a cured article from the hydraulic composition contains steps of: mixing a hydraulic powder with an aggregate, water, compound (1), and the inorganic salt A in such amounts as that a molar ratio of compound (1) to the inorganic salt A, compound (1)/inorganic salt A, is 5/95 to 45/55, preferably 10/90 to 40/60, more preferably 20/80 to 40/60, and even more preferably 20/80 to 30/70 to prepare the hydraulic composition; filling the hydraulic composition in a form and curing; and demolding the cured hydraulic composition from the form. The hydraulic composition containing the early strengthening agent used in the present invention is accelerated to harden and thus it is possible to shorten time until demolding from preparation of the hydraulic composition. In the present invention, time until demolding from the start of preparation of the hydraulic composition, or from a contact of the hydraulic powder with water is preferably 4 to 24 hours for developing a necessary strength for demolding while shortening a production cycle, and from the viewpoint of rapid curing achieved by the early strengthening agent used in the present invention, more preferably 4 to 10 hours, and even more preferably 6 to 10 hours.

The hydraulic composition containing the early strengthening agent used in the present invention can provide a cured article such as a concrete product without steam curing, because the hydraulic composition does not require an energy for accelerating curing such as steam heat. In cases of providing a concrete product without steam curing, time until demolding from a contact of the hydraulic powder with water in preparation of the hydraulic composition is, for developing a necessary strength for demolding while shortening a production cycle, preferably 4 to 24 hours, more preferably 4 to 16 hours, even more preferably 4 to 10 hours, even more preferably 6 to 10 hours, and yet even more preferably 7 to 9 hours. Strength (JIS A 1108) of a concrete product in demolding is preferably not less than 7N/mm², and more preferably not less than 8N/mm² not for damaging the product in demolding.

The method for producing a cured article from the hydraulic composition of the present invention enhances productivity of the cured article such as a concrete product. The method is thus excellent in reduction of environmental burdens. Examples of the cured article produced from the hydraulic composition using a form include products for civil engineering such as various blocks for revetment, box culvert products, segments for tunnel work, and girders for bridge pier, and products for building such as building members for curtain wall, post, beam, and floorboard.

The form 2 of the present invention is as described above, and will be additionally described in detail below.

### <Hydraulic composition>

The hydraulic composition of the present invention contains glycerol, at least one inorganic salt A selected from alkali metal sulfates and alkali metal thiosulfates, and a naphthalene dispersant, wherein a molar ratio of the glycerol to the inorganic salt A, glycerol/inorganic salt A, is 5/95 to 45/55. From the viewpoint of improvement in early strengthening property in short time, the molar ratio is preferably 10/90 to 45/55, more preferably 20/80 to 45/55, and even more preferably 25/75 to 40/60. In cases of the inorganic salt A containing two or more inorganic salts, the total of moles of inorganic salts is used as a mole of the inorganic salt A to calculate the molar ratio. Use of glycerol and the inorganic salt A at a molar ratio within this range enables to increase an early-term strength of a cured article of the hydraulic composition, e.g., strength after about 8 hours from preparation of a concrete, without steam curing or the like.

From the viewpoint of improvement in early strengthening property in short time, the inorganic salt A is preferably an alkali metal sulfate. The inorganic salt A may be hydrated. In cases of using the hydrated inorganic salt A, a weight and the like are calculated based on the anhydride form. Examples of the alkali metal forming a salt include sodium, potassium, and lithium. From the same viewpoint of the effects, preferred are sodium and lithium. Examples of the inorganic salt A include sodium sulfate (Na₂SO₄), potassium sulfate (K₂SO₄), lithium sulfate (Li₂SO₄), sodium thiosulfate (Na₂S₂O₃), potassium thiosulfate (K₂S₂O₃), and lithium thiosulfate (Li₂S₂O₃). Among these salts, preferred are sulfates, more preferred is at least one inorganic salt selected from sodium sulfate and lithium sulfate, and even more preferred is sodium sulfate.

A mechanism underlying the effects of the present invention is still unknown, but presumed that glycerol and the inorganic salt A act synergistically on a hydraulic composition to develop strength early. In addition, it is considered that glycerol and the inorganic salt A do not prevent the naphthalene dispersant from imparting fluidity when they develop the strength. It is concretely considered that, in an early stage of curing of a hydraulic composition, two reactions take place, one of which is generation of ettringite from an aluminate (C3A) and the other of which is generation and precipitation of calcium hydroxide derived from alite (C3S) through progresses of dissolution of gypsum component in the composition. Glycerol acts on the generation of ettringite, and the inorganic salt A on the generation and precipitation of calcium hydroxide . Reflecting such a situation, an optimum ratio of rate of the generation of ettringite to rate of the generation of calcium hydroxide for providing a cured article having high early strength was observed as depending on a molar ratio of glycerol/inorganic salt A. The naphthalene dispersant having a sulfonate group adsorbs on the surface of the hydraulic powder through the sulfonate group, and causes repulsion between hydraulic powder particles by a steric effect of a rigid structure of the naphthalene group to impart fluidity to the hydraulic composition. The sulfonate group has a high adsorbability and can adsorb on ettringite and calcium hydroxide even when generation and precipitation of ettringite and calcium hydroxide are accelerated on the hydraulic powder. The solid structure of the naphthalene group has low affinity to water and high adsorption rate to the hydraulic powder particle, and does not reducing effects to impart fluidity.

Examples of the naphthalene dispersant include a polymer compound having a naphthalenesulfonic acid skeleton such as naphthalenesulfonic acid-formaldehyde condensates. The naphthalene dispersant preferably has a weight average molecular weight of not more than 200000, more preferably not more than 100000, even more preferably not more than 80000, and even more preferably not more than 50000. The weight average molecular weight is also preferably not less than 1000, more preferably not less than 3000, even more preferably not less than 4000, and even more preferably not less than 5000. Putting them together, the weight average molecular weight is preferably 1000 to 200000, more preferably 3000 to 100000, even more preferably 4000 to 80000, and even more preferably 5000 to 50000. Among naphthalene dispersants, those having a pH 3 to 12 at 20°C in the state of a 5% by weight aqueous solution can be used. Liquid and powder naphthalene dispersants can be used. Commercially available naphthalene dispersants can also be used, including Mighty 150 (Kao Corporation), for example.

A naphthalenesulfonic acid-formaldehyde condensate can be produced, for example, by condensing naphthalenesulfonic acid and formaldehyde. The thus prepared condensates may be neutralized. Water-insoluble byproducts generated by neutralization may be removed. For example, first, in order to prepare naphthalenesulfonic acid, 1 mol of naphthalene is reacted with 1.2 to 1.4 mol of sulfuric acid for 2 to 5 hours at 150 to 165°C to obtain a sulfonated product. To the sulfonated product is added dropwise formalin for 3 to 6 hours at 85 to 95°C in an amount corresponding to 0.95 to 0.99 mol of formaldehyde to 1 mol of the sulfonated product, and then condensed at 95 to 105°C. To the resultant condensate are added water and a neutralizer to neutralize at 80 to 95°C. The neutralizer is preferably added in a 1.0 to 1.1 times molar amount to naphthalenesulfonic acid and unreacted sulfuric acid. Water-insoluble matters generated by neutralization may be removed, preferably by filtration. Through these steps, provided is an aqueous solution of a water-soluble naphthalenesulfonic acid-formaldehyde condensate salt. The aqueous solution can be used as is as the naphthalene dispersant. If needed, the aqueous solution is further subjected to a treatment of drying and powderization to obtain a powder of the water-soluble naphthalenesulfonic acid-formaldehyde condensate salt. The product can be used as powder of naphthalene dispersant. The treatment of drying and powderization can be performed by spray drying, drum drying, freeze-drying, or the like. The naphthalenesulfonic acid-formaldehyde condensate may be produced as described above, or may be produced by other conditions or methods.

From the viewpoint of early strengthening property in short time, in the hydraulic composition of the present invention, a weight ratio of the naphthalene dispersant to the total content of glycerol and the inorganic salt A, naphthalene dispersant/[total content of glycerol and the inorganic salt A], is preferably 5/95 to 96/4, more preferably 5/95 to 65/35, even more preferably 5/95 to 50/50, even more preferably 10/90 to 40/60, and yet even more preferably 20/80 to 40/60.

### Examples

The following Test Examples demonstrate the present invention. Test Examples are intended to illustrate the present invention, and not to limit the present invention. Test Examples 1-1 to 6-7 are related to the form 1 of the present invention, and Test Examples 21-1 to 24-5 are related to the form 2 of the present invention.

### <Preparation and Evaluation of Mortar>

### (1) Preparation of mortar

In a mortar mixer (universal mixing stirrer, model: 5DM-03-γ, Dalton Corporation), cement (C) and fine aggregates (S), under mixing conditions as shown in Table 1, were subjected to a process of dry mixing for 10 seconds. To the mixture was added mixing water (W) containing an additive composition for hydraulic composition (used as an aqueous solution containing 25% by weight solids) in such amount as achieving a target slump 21±1 cm and a target amount of entrained air 2±1%. The mixture was subjected to a process of main kneading for 60 seconds at a low speed rotation and then for 120 seconds at a high speed rotation. Amounts (parts by weight) of an early strengthening agent and a dispersant to 100 parts by weight of cement are shown in Tables 2 to 9. They were added to mixing water in such amounts as satisfying conditions shown in Tables 2 to 9.

**[Table 1]**

| W/C (%) | Amount per unit (kg/m³) | | |
|---|---|---|---|
| | W | C | S |
| 40.0 | 320 | 800 | 1400 |

- Cement (C) : ordinary Portland cement (ordinary Portland cement of Taiheiyo Cement Corporation/ordinary Portland cement of Sumitomo Osaka Cement Co., Ltd = 1/1, weight ratio), density: 3.16 g/cm³
- Fine aggregate (S): pit sand from Joyo, FM = 2.67, density: 2.56 g/cm³
- Water (W): tap water

### (2) Evaluation of Mortar

Mortars were evaluated for demolding strength and slump flow according to the following test methods. Evaluation results are shown in Tables 2 to 9.

### (2-1) Evaluation of specimen strength

According to JIS A 1132, mortars were filled in two layers into a cylindrical plastic mold (diameter of a base: 5 cm, height: 10 cm) and cured in air (20°C) in a room at 20°C to prepare cured samples. A sample cured for 8 hours or 24 hours from the preparation of the mortar was demolded from a form, and measured for compressive strength according to JIS A 1108. In Comparative Examples 2 to 4, samples were steam-cured under conditions shown in Table 3. For steam curing, a steam curing eqipment (Sanlen-shiki jouki yojou sou, made by Marui Co., Ltd., was used.

Compressive strength was listed as a measured value and/or a strength ratio (%) relative to that of each standard sample in Tables 2 to 9. Standard samples for comparison were prepared without an early strengthening agent but added only with a dispersant in such amount as achieving a flow value within the range of 190 to 250 mm as measured according to the flow test. Within the range of flow values, it is considered that the difference in dispersity has a small influence on the early strength. In preparation of mortars with an early strengthening agent other than the samples for comparison, an amount of a dispersant was increased in consideration with a reduced mortar flow due to the early strengthening agent. The increase is limited to 0.1 part by weight from the amount in the standard sample (to 100 parts by weight of cement), because the increased amount of the dispersant tends to decrease an early strength. Within each table (among samples having the same former number in their hyphenated Example numbers), sample strengths shown were results of evaluation around the same time. However, among tables, the points of evaluations were not exactly the same and caused some differences in strength between samples using the same early strengthening agent and dispersant. In order to allow the comparison between tables, a sample's strength was shown as a strength ratio in Tables 3 to 8. In tables 4 and 5 and tables 6 and 7, sample strengths shown were results of evaluation around the same time.

More specifically, in Tables 3 to 8, a strength ratio was determined as follows. First, a measured strength of a sample prepared only with a dispersant (1) was normalized to 100 and used to calculate relative strengths of samples evaluated around the same time. Next, Test Example 1-7 in Table 2 was used as a standard to calculate factors for converting measured strengths of Test Examples 2-8, 3-17, 4-7, and 5-3 of Table 3 to 5 prepared using glycerol, an inorganic salt A, and a dispersant (1) under the same conditions as Test Example 1-7 to the same relative strength (354). The measured strengths of corresponding Test Examples were multiplied by the calculated factors to obtain corrected strengths. From these corrected strengths, relative values to respective strengths of standard samples were calculated. As thus, among Tables, relative strengths of Test Examples 2-8, 3-17, 4-7, and 5-3 were same to that of Test Examplel-7.

### (2-2) Flow test

According to JIS R 5201, a mortar prepared according to the method described above was immediately put in a flow corn by two layers. The flow corn was removed precisely upward, and the mortar was measured for flow lengths in a direction of the maximum flow and a direction orthogonal to the direction. In this test, the falling motion described in JIS R 5201 was not performed.

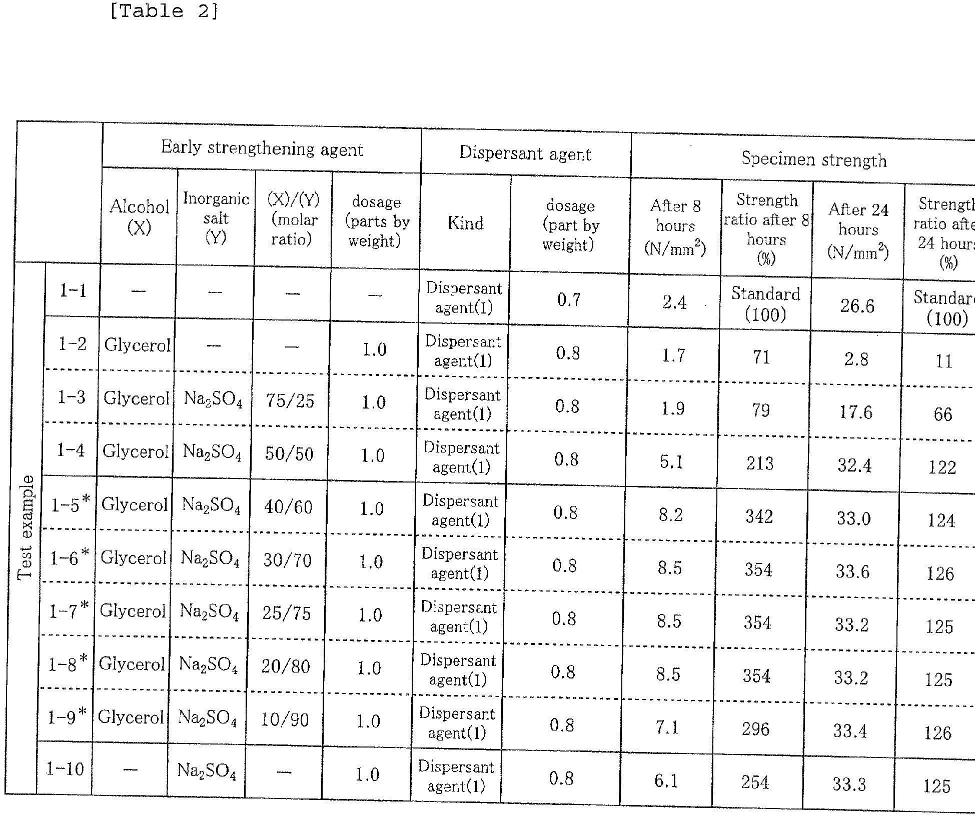

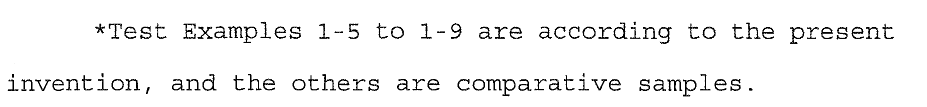

Table 2 shows evaluation results of samples prepared with a combination of glycerol and sodium sulfate as an early strengthening agent at a constant amount with various molar ratios of glycerol to sodium sulfate. Results showed that the early strengthening agent according to the present invention resulted in a higher strength ratio after 8 hours than that resulting from glycerol or sodium sulfate alone and exhibited significant effects by combination of glycerol with sodium sulfate at specific molar ratios.

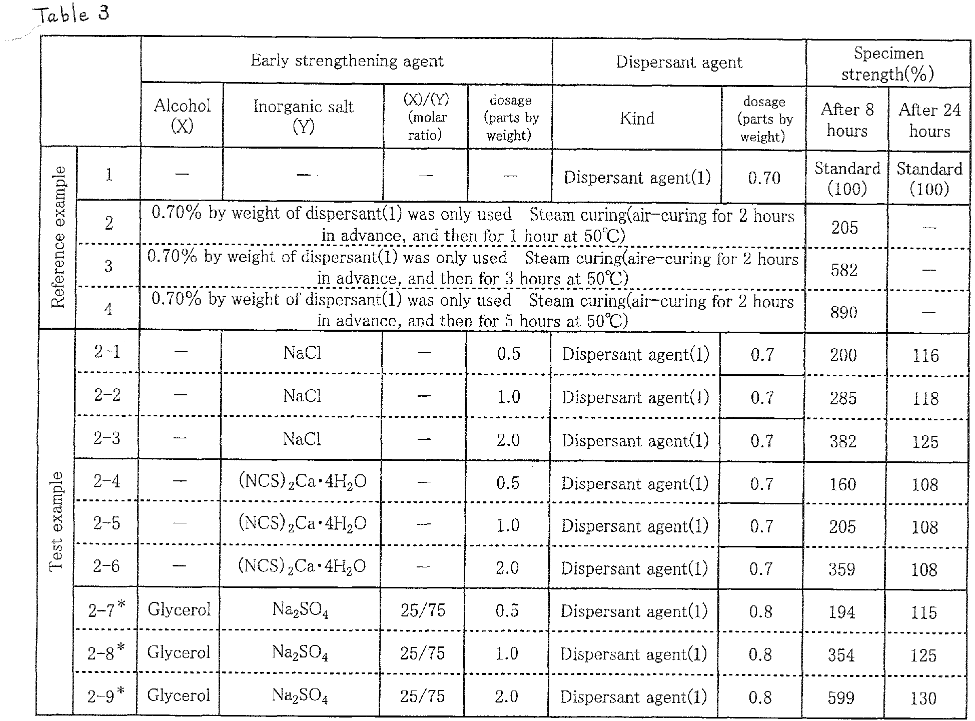

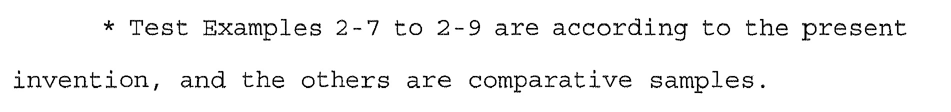

Table 3 shows evaluation results of samples for comparison between the early strengthening agent of the present invention and sodium chloride and calcium thiocyanate, used as conventional early strengthening agents. Results showed that the early strengthening agent of the present invention added in an amount of not less than 1.00 parts by weight resulted in a higher strength ratio after 8 hours than that of comparative samples. Results also showed that the early strengthening agent of the present invention used in an amount of 2.00 parts by weight resulted in a comparative or greater strength through curing for 8 hours at 20°C than that resulting from steam curing for 3 hours at 50°C without the common early strengthening agent used in comparative products.

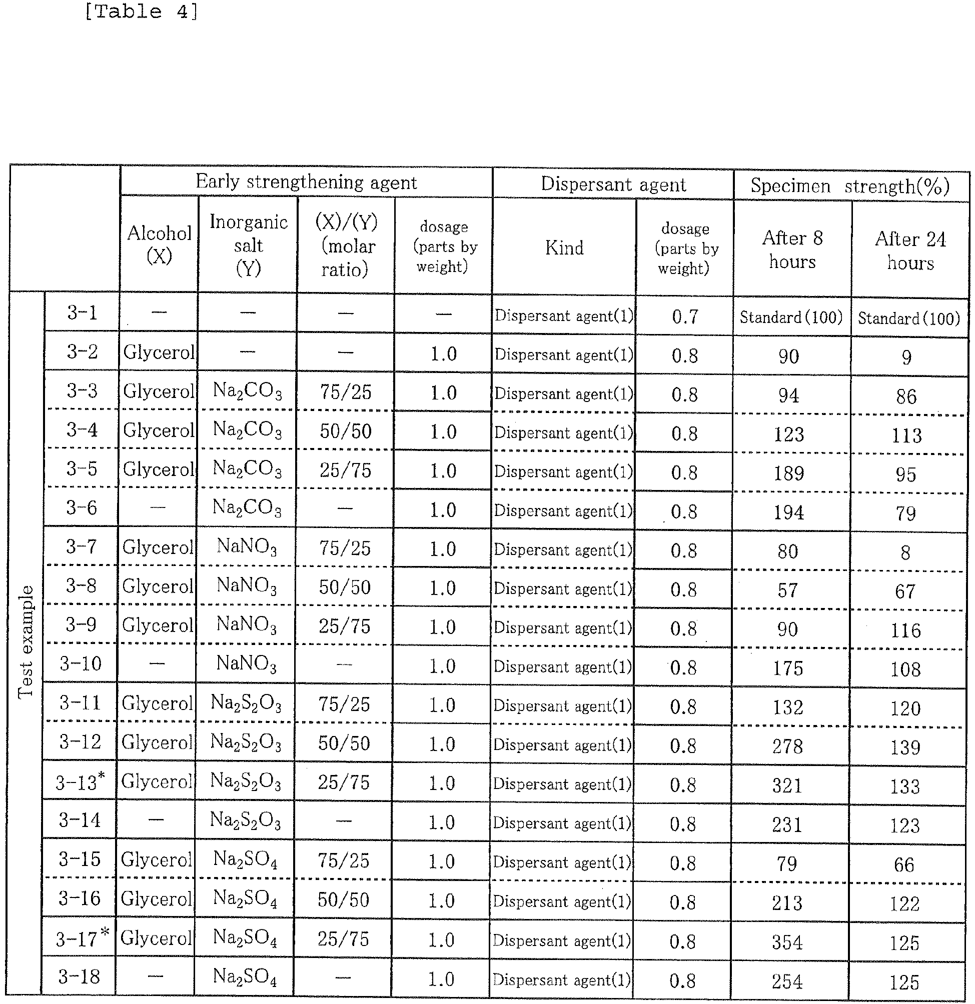

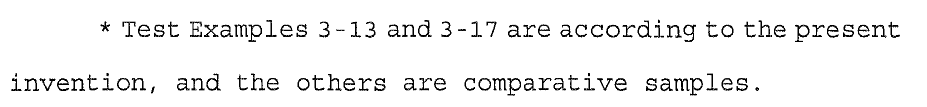

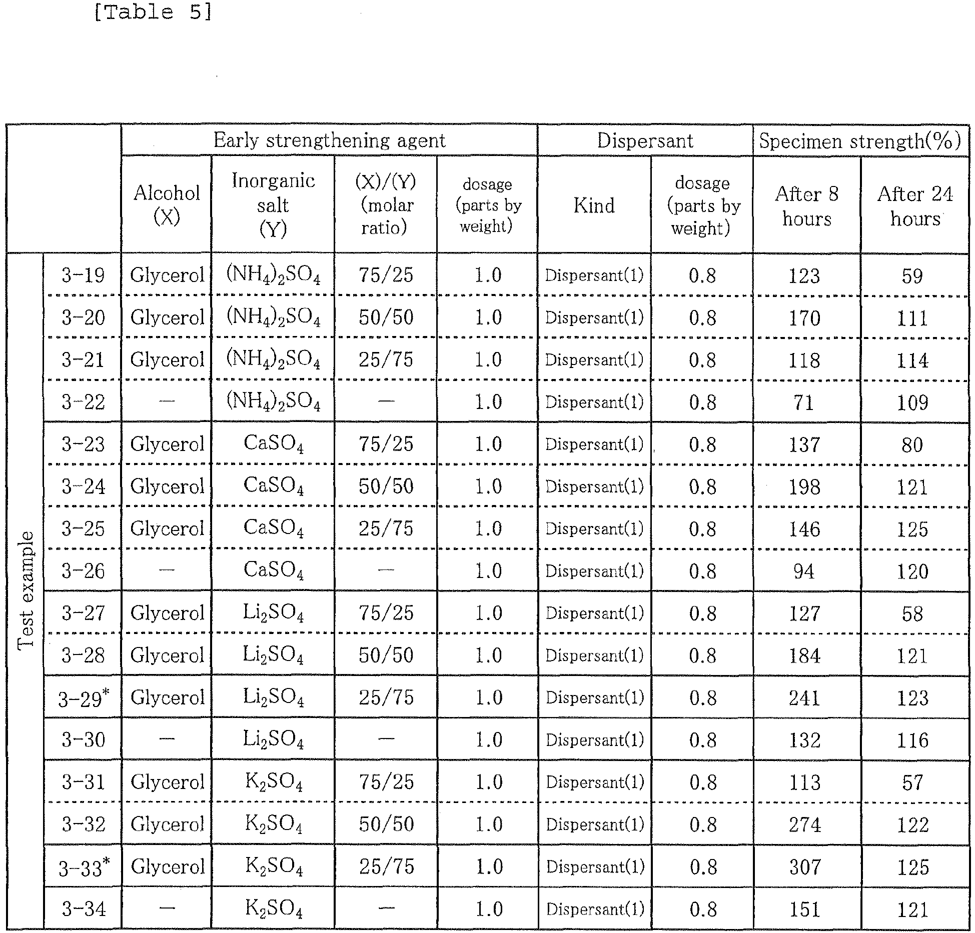

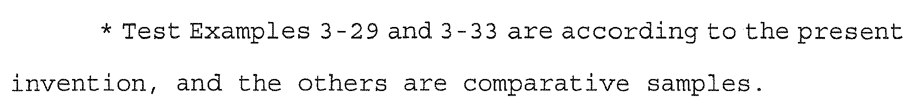

Tables 4 and 5 show evaluation results of samples prepared with combinations of glycerol with various inorganic salts. Results are that the early strengthening agent of the present invention provides a higher strength ratio after 8 hours than combination of glycerol with an inorganic salt, being outside inorganic salt A of the present invention, and the invention combination has the superior improvement in early strengthening property in short time.

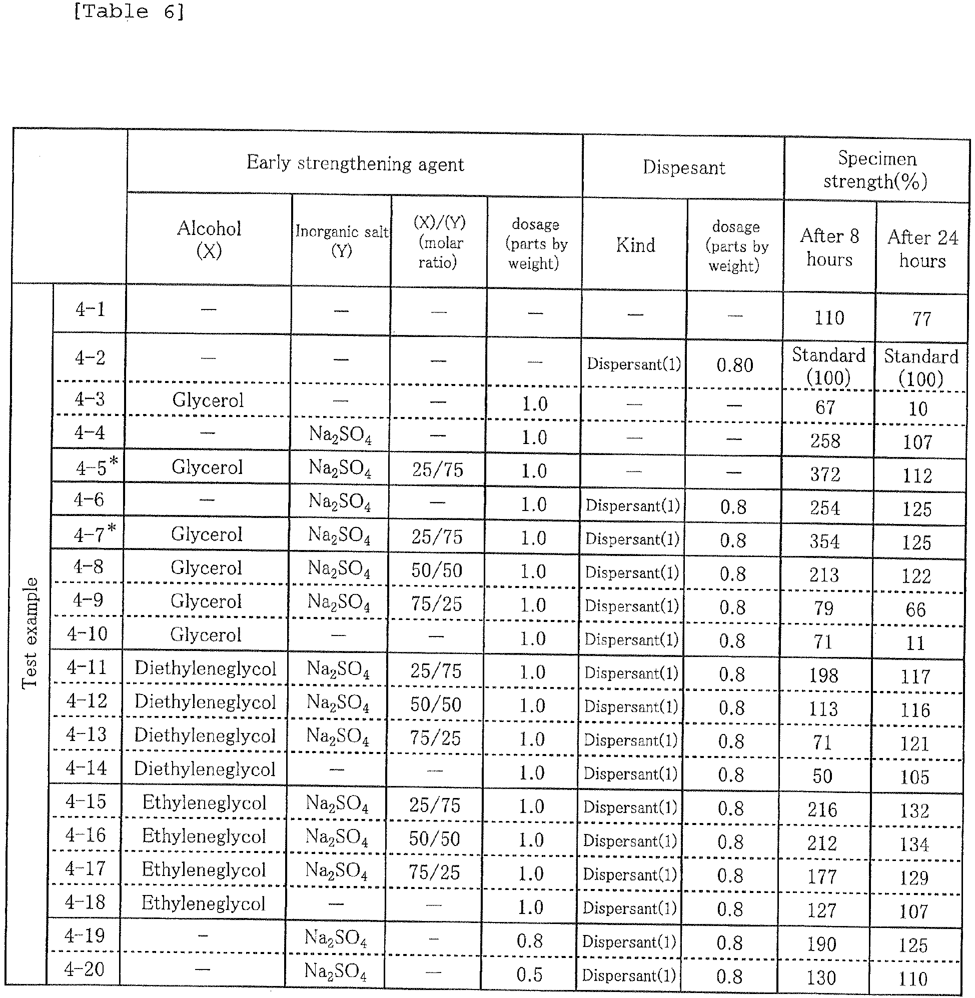

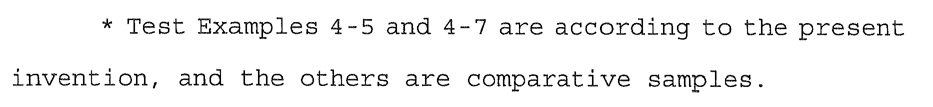

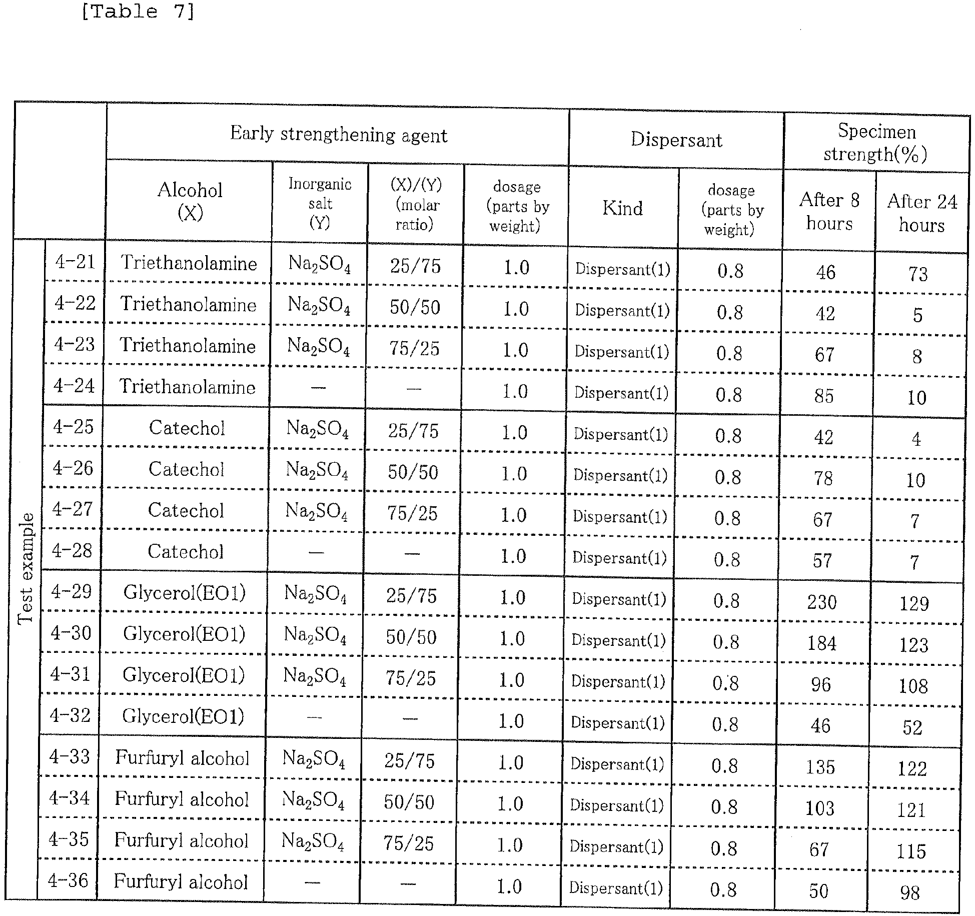

In table 7, all Test Examples are comparative samples.

Tables 6 and 7 show evaluation results of samples prepared with combinations of various alcohols with sodium sulfate. Results are that the early strengthening agent of the present invention provides a higher strength ratio after 8 hours than combination of an alcohol other than glycerol with sodium sulfate, and the invention combination has the superior improvement in early strengthening property in short time.

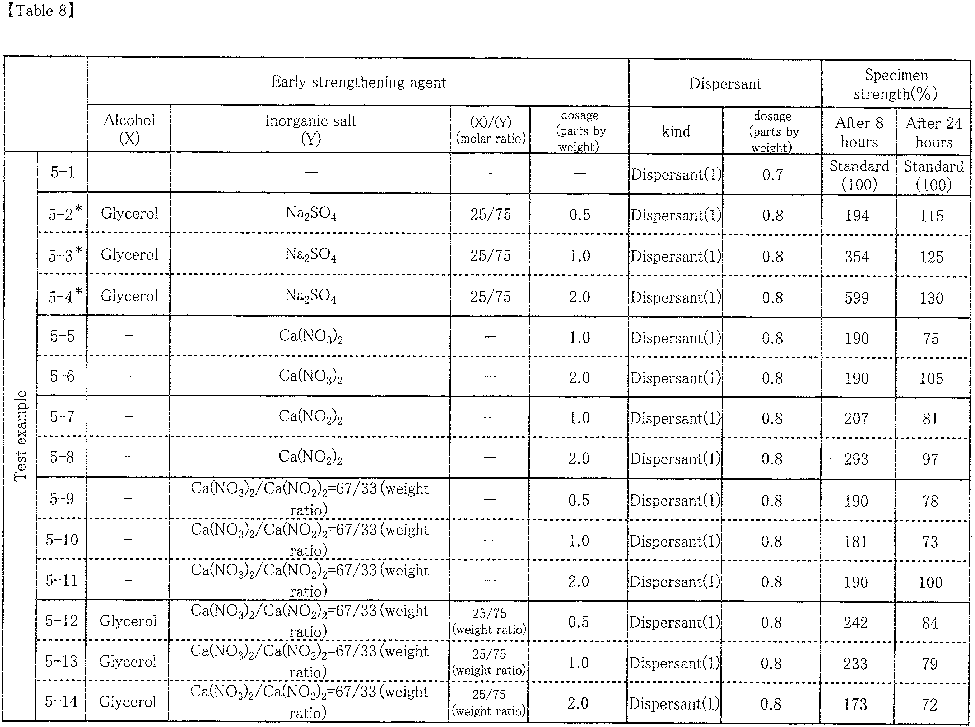

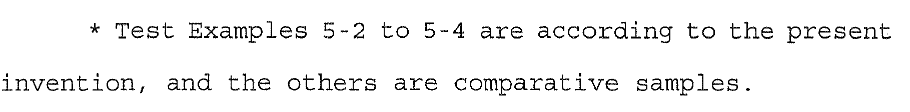

Table 8 shows evaluation results of samples prepared with the early strengthening agent of the present invention and with admixtures disclosed in JP-A No. 06-199555. Results showed that the early strengthening agent according to the present invention resulted in a higher strength ratio after 8 hours than that resulting from admixtures (Test Examples 5-12 to 5-14) disclosed in JP-A No. 06-199555, and it is noted that early strengthening property in short time is improved.

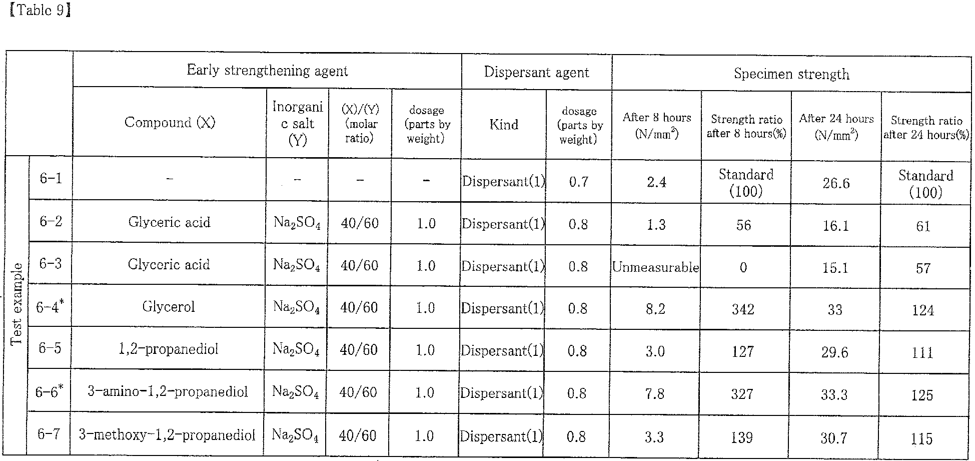

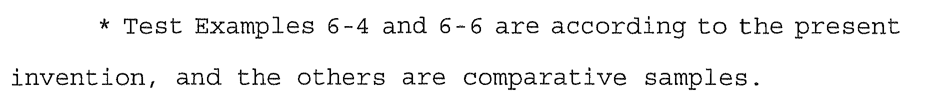

Table 9 shows evaluation results of samples prepared with combinations of various compounds with sodium sulfate. Results showed that the early strengthening agent according to the present invention resulted in a higher strength ratio after 8 hours than that resulting from combinations of a compound other than compound (1) according to the present invention with sodium sulfate, and the invention combination only has an large improvement in early strengthening property in short time. Results also showed that the early strengthening agent according to the present invention increased a strength ratio after 24 hours.

In Tables 2 to 9, an amount of a component added to a mortar referred to an effective amount (solid content) of the component (parts by weight) to 100 parts by weight of cement. Components used were as follows.
- glycerol (EO1) : adduct of glycerol with ethylene oxide in an average addition mole number 1 per mole of glycerol
- dispersant (1): Mighty 21HP (Kao Corporation, polycarboxylic acid dispersant containing construction units derived from monomers represented by formula (D1-1) and formula (D1-2))

Molecular weights of compounds were considered as follows.
- Na₂SO₄: 142.04
- Li₂SO₄: 109.95
- K₂SO₄: 174.27
- Na₂S₂O₃: 158.11
- Na₂CO₃: 105.989
- NaNO₃: 84.99
- (NH₄)₂SO₄: 132.14
- CaSO₄: 136.14
- glycerol: 92
- diethylene glycol: 106.12
- ethylene glycol: 62.07
- triethanolamine: 149.19
- catechol: 142.04
- glycerol (EO1): 120
- furfuryl alcohol: 98.1
- glyceric acid: 106.077
- glycerophosphoric acid: 172.074
- 1,2-propanediol: 76.09
- 3-amino-1,2-propanediol: 91.11
- 3-methoxy-1,2-propanediol: 106.12

Below, Test Examples 21-1 to 24-5 will be described in detail in reference to the form 2 of the present invention.

### (1) Preparation of mortar

Mortars were prepared in the same way as above, except that amounts of an alcohol (e.g., glycerol), an inorganic salt, and a dispersant added to 100 parts by weight of cement were as shown in Tables 10 to 13. An alcohol (e.g., glycerol), an inorganic salt, and a dispersant were mixed with water in such amounts as satisfying amounts shown in Tables 10 to 13 to prepare an additive composition for hydraulic composition in an aqueous solution form of 25% by weight of a total of the alcohol, the inorganic salt, and the dispersant.

### (2) Evaluation of mortar

Mortars were evaluated for demolding strength and slump flow according to the following test methods. Evaluation results were shown in Tables 10 to 13.

### (2-1) Evaluation of cured article for strength

According to JIS A 1132, mortars were put by two layers in a cylindrical plastic mold (diameter of a base: 5 cm, height: 10 cm) and cured in air at 20°C in a room to prepare cured samples . A sample cured for 8 or 24 hours from the preparation of the mortar was demolded from a form, and measured for compressive strength according to JIS A 1108.

In view of compressive strength, relative values also calculated per 100 of a standard sample are shown in Tables 10 to 13. Standard samples for comparison were prepared, without glycerol and an inorganic salt A, only with a dispersant in such an amount as to achieve a flow value, as measured according to the flow test, within a target range. For dispersants (21) to (24), which could decrease concrete viscosity, a target range of flow value was set to 210±30 mm. For dispersants (25) and (26), which could increase concrete viscosity, a target range of flow value was set to 260±20 mm.

Within each of Tables 10 to 13, among samples having the same former number in their hyphenated Example numbers, strengths shown were results of evaluation around the same time. However, among tables, the points of evaluations were not exactly the same and caused some differences in strength between samples using alcohol (glycerol or other alcohol), an inorganic salt A, and a dispersant under the same conditions. A relative strength calculated just based on a standard sample in a table, without reference to the differences, is difficult to be compared to other relative strengths in other tables to determine which is better. In order to allow the simple comparison between tables, relative strengths are appropriately calculated based on corrected values from measured strengths. For this purpose, first, a measured strength of a sample prepared only with a dispersant (21) was normalized to 100 and used to calculate relative strengths of samples evaluated at the same time. Next, Test Example 21-7 in Table 10 was used as a standard to calculate factors for converting measured strengths of Test Examples 22-5, 23-3, and 24-2 prepared using glycerol, an inorganic salt A, and a dispersant (21) under the same conditions to Test Example 21-7 to the same relative strength (381). Calculated factors were used to multiply relative strengths of corresponding Test Examples to obtain corrected relative strengths. As thus, among Tables, relative strengths of Test Examples 22-5, 23-3, and 24-2 were same to that of Test Example 21-7.

### (2-2) Evaluation of flowability

Mortars prepared according to the method described above were subjected to a flow test according to JIS R 5201, except for tapping. Relative values (relative mortar flow) to respective measured values of standard samples were also shown in Tables 10 to 13. Since a mortar exhibited flowability in different ways depending on a structure of a dispersant, relative mortar flow values were calculated based on a mortar using respective dispersants.

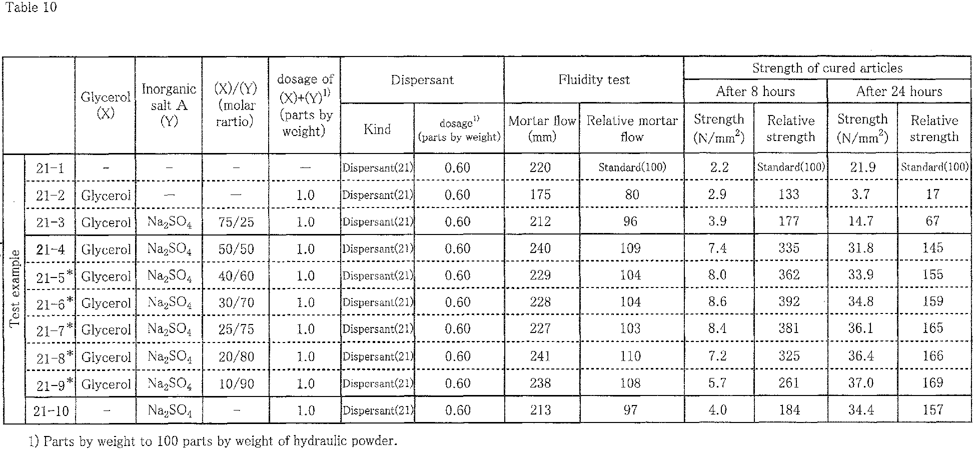

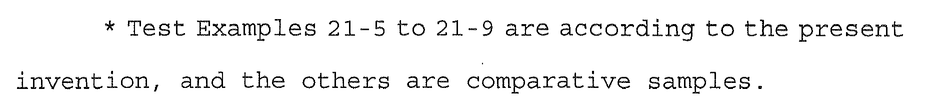

Table 10 shows evaluation results of mortars, prepared from glycerol, sodium sulfate and a naphthalene dispersant, at a constant dosage in total, with changed molar ratios of glycerol to sodium sulfate. Results showed that a mortar according to the present invention could keep a mortar flow and had a higher strength ratio after 8 hours than that resulting from only glycerol or sodium sulfate, and exhibited remarkable effects due to a combination of glycerol, sodium sulfate, and the naphthalene dispersant at a specific molar ratio of glycerol and sodium sulfate to the naphthalene dispersant.

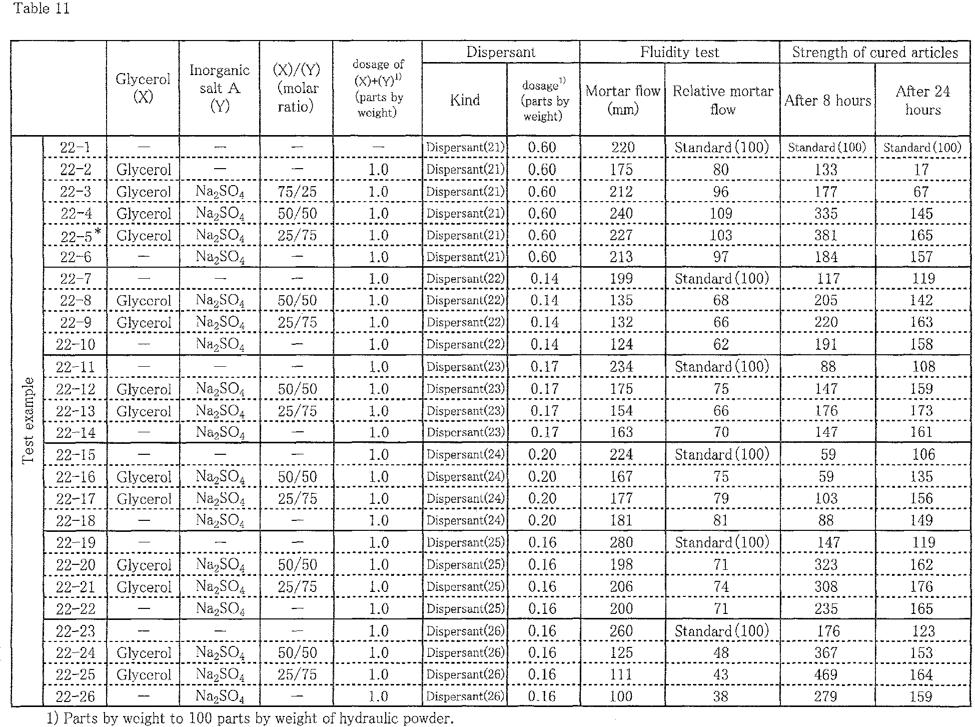

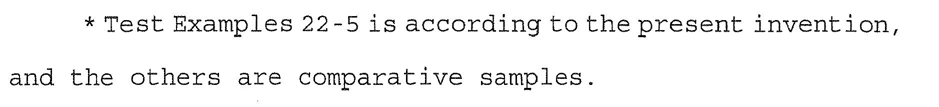

Table 11 shows evaluation results of mortars prepared using glycerol, an inorganic salt A, and various dispersants. Results showed that mortars prepared using a dispersant (21), which was a naphthalene dispersant, together with glycerol and an inorganic salt A at a specific molar ratio (Test Examples 22-4 and 22-5) could keep a mortar flow and had a higher strength ratio after 8 hours, and exhibited to have a superior improvement in early strengthening property in short time.

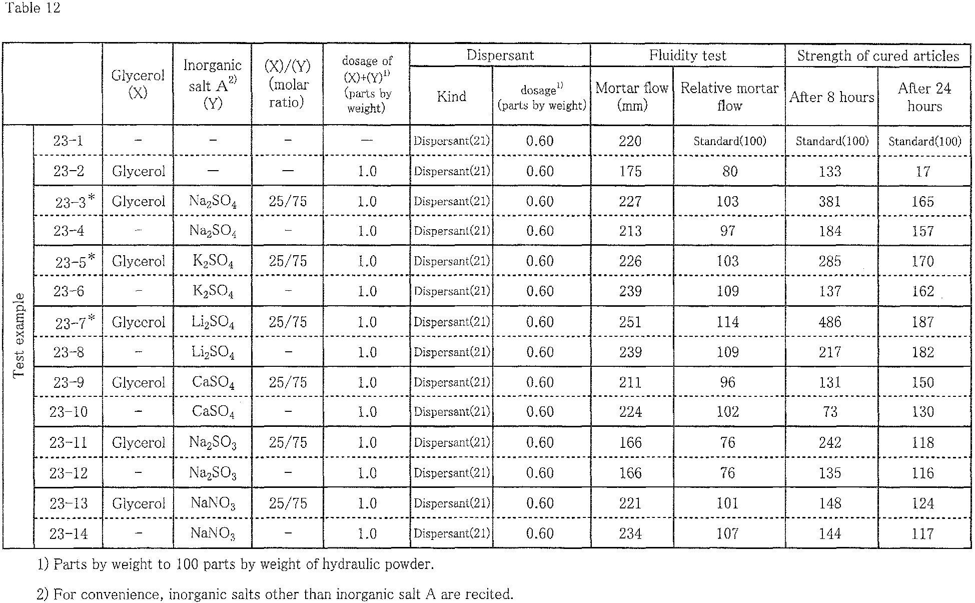

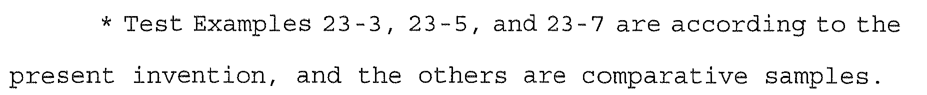

Table 12 shows evaluation results of mortars prepared using glycerol and various inorganic salts.

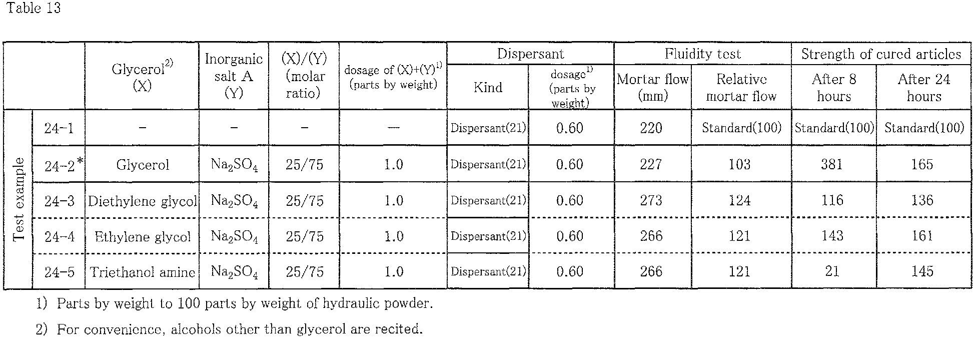

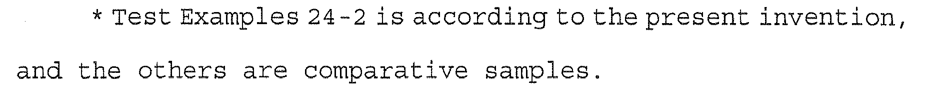

Table 13 shows evaluation results of mortars prepared using various alcohols and sodium sulfate.

In Tables 10 to 13, an amount of a component added to a mortar referred to an effective amount (solid content) of the component (parts by weight) to 100 parts by weight of cement. Components used were as follows.
- dispersant (21): naphthalenesulfonic acid-formaldehyde condensate (Kao Corporation, Mighty 150)
- dispersant (22): methoxypolyethylene glycol monomethacrylate (23 moles)/2-hydroxyethyl methacrylate phosphate ester (mixture of monoester and diester) [45/55 molar ratio] copolymer (weight average molecular weight: 35000), prepared according to Examples in JP-A No. 2006-52381.
- dispersant (23): methoxypolyethylene glycol monomethacrylate (23 moles)/methacrylic acid copolymer (Nippon Shokubai Co., Ltd., Aqualoc FC900)
- dispersant (24): polyoxyethylene allyl ether (30 moles)/maleic acid copolymer (NOF CORPORATION, Malialim-AKM-60F)
- dispersant (25): polyoxyethylene alkylene ether/acrylic acid copolymer (Nippon Shokubai Co., Ltd., Aqualoc HW-60)
- dispersant (26): methoxypolyethylene glycol monomethacrylate (120 moles)/methacrylic acid copolymer (Kao Corporation, Mighty 21ES)

## Claims

1. Use of a compound represented by formula (1) (hereinafter, referred to as compound (1)) and at least one inorganic salt A selected from alkali metal sulfates and alkali metal thiosulfates as an early strengthening agent by adding compound (1) and the inorganic salt A to a hydraulic composition in such amounts that a molar ratio of compound (1) to the inorganic salt A, compound (1)/inorganic salt A, is 5/95 to 45/55: 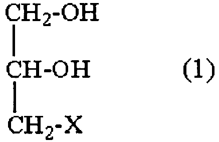 wherein, X represents a hydroxy group or an amino group.

2. The use according to claim 1, wherein the inorganic salt A is at least one salt selected from sodium sulfate and lithium sulfate.

3. The use according to claim 1 or 2, wherein compound (1) has a hydroxy group as X in formula (1).

4. The use according to any one of claims 1 to 3, wherein the early strengthening agent is comprised in a composition further comprising a dispersant.

5. The use according to claim 4, wherein the dispersant is a naphthalene dispersant.

6. A method for producing a hydraulic composition, comprising a step of mixing a hydraulic powder with a compound represented by formula (1) and at least one inorganic salt A selected from alkali metal sulfates and alkali metal thiosulfates, wherein a molar ratio of the compound represented by formula (1) to the inorganic salt A is 5/95 to 45/55: 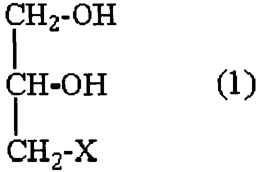 wherein, X represents a hydroxy group or an amino group.

7. The method for producing a hydraulic composition according to claim 6, wherein the inorganic salt A is at least one salt selected from sodium sulfate and lithium sulfate.

8. A method for producing a cured article, comprising the steps of:
mixing a hydraulic composition prepared by a method according to claim 6 or 7 with an aggregate and water;
filling the obtained hydraulic composition in a form and curing; and
demolding the cured hydraulic composition from the form,
wherein time until demolding from the start of preparing the hydraulic composition is 4 to 10 hours.

9. The method according to claim 8, wherein the compound (1) is glycerol, and wherein the hydraulic composition further comprises a naphthalene dispersant mixed thereto.

10. The method according to claim 8 or 9, comprising the step of filling the hydraulic composition in a form and curing without steam curing.

11. The method according to any one of claims 8 to 10, wherein the inorganic salt A is at least one salt selected from sodium sulfate and lithium sulfate.

12. A hydraulic composition, comprising an early strengthening agent for hydraulic composition, a hydraulic powder, an aggregate, and water, the early strengthening agent comprising a compound represented by formula (1) (hereinafter, referred to as compound (1)) and at least one inorganic salt A selected from alkali metal sulfates and alkali metal thiosulfates, wherein a molar ratio of compound (1) to the inorganic salt A, compound (1)/inorganic salt A, is 5/95 to 45/55: 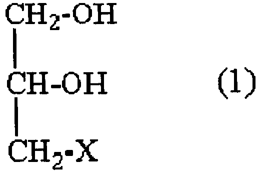 wherein, X represents a hydroxy group or an amino group.

13. The hydraulic composition according to claim 12, wherein the total amount of compound (1) and the inorganic salt A is 0.01 to 10 parts by weight to 100 parts by weight of the hydraulic powder.

14. The hydraulic composition according to claim 13, wherein the inorganic salt A is at least one salt selected from sodium sulfate and lithium sulfate.

15. The hydraulic composition according to claim 13 or 14, wherein compound (1) has a hydroxy group as X in formula (1).

16. The hydraulic composition according to any one of claims 13 to 15, further comprising a dispersant.

17. The hydraulic composition according to claim 16, wherein the dispersant is a naphthalene dispersant.

## Patentansprüche

1. Verwendung einer Verbindung, dargestellt durch die Formel (1), (im Folgenden als Verbindung (1) bezeichnet) und mindestens eines anorganischen Salzes A, ausgewählt aus Alkalimetallsulfaten und Alkalimetallthiosulfaten, als Frühverstärkungsmittel durch Zugabe der Verbindung (1) und des anorganischen Salzes A zu einer hydraulischen Zusammensetzung in solchen Mengen, dass ein Molverhältnis von Verbindung (1) zu dem anorganischen Salz A,
Verbindung (1)/organisches Salz A, 5/95 bis 45/55 beträgt: 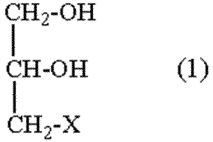 worin X eine Hydroxygruppe oder eine Aminogruppe darstellt.

2. Die Verwendung gemäß Anspruch 1, wobei das anorganische Salz A mindestens ein Salz, ausgewählt aus Natriumsulfat und Lithiumsulfat, ist.

3. Die Verwendung gemäß Anspruch 1 oder 2, wobei die Verbindung (1) in der Formel (1) als X eine Hydroxygruppe aufweist.

4. Die Verwendung gemäß mindestens einem der Ansprüche 1 bis 3, wobei das Frühverstärkungsmittel in einer Zusammensetzung enthalten ist, die ferner ein Dispersionsmittel umfasst.

5. Die Verwendung gemäß Anspruch 4, wobei das Dispersionsmittel ein Naphthalin-basiertes Dispersionsmittel ist.

6. Verfahren zur Herstellung einer hydraulischen Zusammensetzung, umfassend einen Schritt des Mischens eines hydraulischen Pulvers mit einer Verbindung, dargestellt durch die Formel (1), und mindestens einem anorganischen Salz A, ausgewählt aus Alkalimetallsulfaten und Alkalimetallthiosulfaten,
wobei ein Molverhältnis der Verbindung, dargestellt durch die Formel (1), zum anorganischen Salz A 5/95 bis 45/55 beträgt: 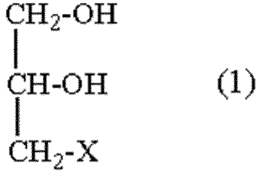 worin X eine Hydroxygruppe oder eine Aminogruppe darstellt.

7. Das Verfahren zur Herstellung einer hydraulischen Zusammensetzung gemäß Anspruch 6, wobei das anorganische Salz A mindestens ein Salz, ausgewählt aus Natriumsulfat und Lithiumsulfat, ist.

8. Verfahren zur Herstellung eines gehärteten Gegenstands, umfassend die Schritte:
Mischen einer, nach einem Verfahren gemäß Anspruch 6 oder 7 hergestellten, hydraulischen Zusammensetzung mit einem Aggregat und Wasser;
Füllen der erhaltenen hydraulischen Zusammensetzung in eine Form und Aushärten; und
Entnehmen der ausgehärteten hydraulischen Zusammensetzung aus der Form,
wobei die Zeit bis zur Entnahme ab Beginn der Herstellung der hydraulischen Zusammensetzung 4 bis 10 Stunden beträgt.

9. Das Verfahren gemäß Anspruch 8, wobei die Verbindung (1) Glycerin ist und wobei die hydraulische Zusammensetzung ferner ein damit vermischtes Naphthalin-basiertes Dispersionsmittel umfasst.

10. Das Verfahren gemäß Anspruch 8 oder 9, umfassend den Schritt des Füllens der hydraulischen Zusammensetzung in eine Form und des Aushärtens ohne Dampfhärtung.

11. Das Verfahren gemäß mindestens einem der Ansprüche 8 bis 10, wobei das anorganische Salz A mindestens ein Salz, ausgewählt aus Natriumsulfat und Lithiumsulfat, ist.

12. Hydraulische Zusammensetzung, umfassend ein Frühverstärkungsmittel für die hydraulische Zusammensetzung, ein hydraulisches Pulver, ein Aggregat und Wasser,
wobei das Frühverstärkungsmittel eine Verbindung, dargestellt durch die Formel (1), (im Folgenden als Verbindung (1) bezeichnet) und mindestens ein anorganisches Salz A, ausgewählt aus Alkalimetallsulfaten und Alkalimetallthiosulfaten, umfasst,
wobei ein Molverhältnis von Verbindung (1) zu dem anorganischen Salz A, Verbindung (1)/anorganisches Salz A, 5/95 bis 45/55 beträgt: 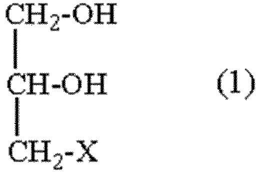 worin X eine Hydroxygruppe oder eine Aminogruppe darstellt.

13. Die hydraulische Zusammensetzung gemäß Anspruch 12, wobei die Gesamtmenge der Verbindung (1) und des anorganischen Salzes A 0,01 bis 10 Gewichtsteile bis 100 Gewichtsteile des hydraulischen Pulvers beträgt.

14. Die hydraulische Zusammensetzung gemäß Anspruch 13, wobei das anorganische Salz A mindestens ein Salz, ausgewählt aus Natriumsulfat und Lithiumsulfat, ist.

15. Die hydraulische Zusammensetzung gemäß Anspruch 13 oder 14, wobei die Verbindung (1) in Formel (1) als X eine Hydroxygruppe aufweist.

16. Die hydraulische Zusammensetzung gemäß mindestens einem der Ansprüche 13 bis 15, ferner umfassend ein Dispersionsmittel.

17. Die hydraulische Zusammensetzung gemäß Anspruch 16, wobei das Dispersionsmittel ein Naphthalin-basiertes Dispersionsmittel ist.

## Revendications

1. Utilisation d'un composé représenté par la formule (1) (ci-après, appelé composé (1)) et d'au moins un sel inorganique A sélectionné parmi les sulfates de métal alcalin et les thiosulfates de métal alcalin comme agent de renforcement précoce par l'ajout du composé (1) et du sel inorganique A à une composition hydraulique en des quantités telles qu'un rapport molaire entre le composé (1) et le sel inorganique A, composé (1)/sel inorganique A, est de 5/95 à 45/55 : 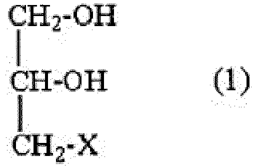 dans laquelle, X représente un groupement hydroxy ou un groupement amino.

2. Utilisation selon la revendication 1, dans laquelle le sel inorganique A est au moins un sel sélectionné parmi le sulfate de sodium et le sulfate de lithium.

3. Utilisation selon la revendication 1 ou 2, dans laquelle le composé (1) contient un groupement hydroxy en tant que X dans la formule (1).

4. Utilisation selon l'une quelconque des revendications 1 à 3, dans laquelle l'agent de renforcement précoce est compris dans une composition comprenant en outre un dispersant.

5. Utilisation selon la revendication 4, dans laquelle le dispersant est un dispersant à base de naphtalène.

6. Procédé de production d'une composition hydraulique, comprenant une étape de mélange d'une poudre hydraulique avec un composé représenté par la formule (1) et au moins un sel inorganique A sélectionné parmi les sulfates de métal alcalin et les thiosulfates de métal alcalin, dans lequel un rapport molaire entre le composé représenté par la formule (1) et le sel inorganique A est de 5/95 à 45/55 : 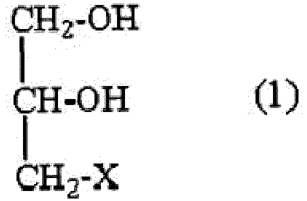 dans laquelle, X représente un groupement hydroxy ou un groupement amino.

7. Procédé de production d'une composition hydraulique selon la revendication 6, dans lequel le sel inorganique A est au moins un sel sélectionné parmi le sulfate de sodium et le sulfate de lithium.

8. Procédé de production d'un article durci, comprenant les étapes suivantes :
le mélange d'une composition hydraulique préparée par un procédé selon la revendication 6 ou 7 avec un agrégat et de l'eau ;
le remplissage de la composition hydraulique obtenue dans une forme et un durcissement ; et
le démoulage de la composition hydraulique durcie à partir de la forme,
dans lequel la durée jusqu'au démoulage à partir du début de la préparation de la composition hydraulique est de 4 à 10 heures.

9. Procédé selon la revendication 8, dans lequel le composé (1) est le glycérol, et dans lequel la composition hydraulique comprend en outre un dispersant à base de naphtalène mélangé avec celle-ci.

10. Procédé selon la revendication 8 ou 9, comprenant l'étape de remplissage de la composition hydraulique dans une forme et un durcissement sans durcissement à la vapeur.

11. Procédé selon l'une quelconque des revendications 8 à 10, dans lequel le sel inorganique A est au moins un sel sélectionné parmi le sulfate de sodium et le sulfate de lithium.

12. Composition hydraulique, comprenant un agent de renforcement précoce pour composition hydraulique, une poudre hydraulique, un agrégat, et de l'eau, l'agent de renforcement précoce comprenant un composé représenté par la formule (1) (ci-après, appelé composé (1)) et au moins un sel inorganique A sélectionné parmi les sulfates de métal alcalin et les thiosulfates de métal alcalin, dans laquelle un rapport molaire entre le composé (1) et le sel inorganique A, composé (1)/sel inorganique A, est de 5/95 à 45/55 : 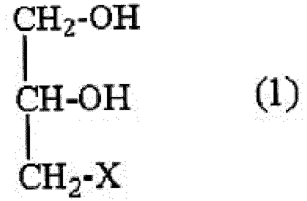 dans laquelle X représente un groupement hydroxy ou un groupement amino.

13. Composition hydraulique selon la revendication 12, dans laquelle la quantité totale du composé (1) et du sel inorganique A est de 0,01 à 10 parties en poids pour 100 parties en poids de la poudre hydraulique.

14. Composition hydraulique selon la revendication 13, dans laquelle le sel inorganique A est au moins un sel sélectionné parmi le sulfate de sodium et le sulfate de lithium.

15. Composition hydraulique selon la revendication 13 ou 14, dans laquelle le composé (1) présente un groupement hydroxy en tant que X dans la formule (1).

16. Composition hydraulique selon l'une quelconque des revendications 13 à 15, comprenant en outre un dispersant.

17. Composition hydraulique selon la revendication 16, dans laquelle le dispersant est un dispersant à base de naphtalène.
